# EUROPÄISCHE PATENTSCHRIFT

(11) **EP 1 099 076 B1**
(45) Veröffentlichungstag und Bekanntmachung des Hinweises auf die Patenterteilung: **17.03.2004**
(21) Anmeldenummer: 99950442.6
(22) Anmeldetag: 23.07.1999
(51) Int. Cl.: F16P 3/14

(54) **LAGERLIFT**
GOODS LIFT
MONTE-CHARGE

(30) Priorität: 23.07.1998 DE 19835033
(43) Veröffentlichungstag der Anmeldung: 16.05.2001
(73) Patentinhaber: Bellheimer Metallwerk GmbH, D-76752 Bellheim (DE)
(72) Erfinder: SIEGLER, Adrian, D-76756 Bellheim (DE)
(74) Vertreter: Böning, Manfred, Prof.Dr.-Ing.
(86) Internationale Anmeldenummer: PCT/DE1999/002313
(87) Internationale Veröffentlichungsnummer: WO 2000/005164

(56) Entgegenhaltungen:
- DE-A- 2 444 891
- DE-A- 2 648 432
- DE-U- 29 606 381
- FR-A- 2 543 655

## Beschreibung

### Technisches Gebiet

Die Erfindung betrifft einen Lagerlift mit mindestens einer Beschickungs- und Entnahmeöffnung und einer vertikal in einem Schacht zwischen sich gegenüberliegenden Lagersäulen verfahrbaren Transporteinheit für einzulagernde Lagergutträger, bei dem am der Transporteinheit zugewandten Ende der Beschickungs- und Entnahmeöffnung ein Lichtgitter zum Erfassen der Höhe des einzulagernden Gutes angeordnet ist und bei dem die Bewegung der Transporteinheit während der Ein- bzw. Auslagervorgänge im Falle des Eindringens eines die Beschickungs- und Entnahmeöffnung passierenden Fremdkörpers in die Bewegungsbahn der Transporteinheit durch eine Sicherheitseinrichtung automatisch gestoppt wird.

### Stand der Technik

Ein Lagerlift der vorstehenden Art ist aus der DE 296 06 381 U1 bekannt. Bei dem bekannten Lagerlift ist am hinteren Ende der Beschickungs- und Entnahmeöffnung ein Lichtgitter angeordnet, das einzig und allein als Sensor zur Ermittlung der Höhe des einzulagernden Gutes dient und in Verbindung mit einer entsprechenden Steuerlogik dafür Sorge trägt, daß das jeweilige Lagergut an Plätzen eingelagert wird, deren Höhe der Höhe des Lagerguts möglichst nahekommt. Als zur Messung der Lagerguthöhe ausgebildete Lichtgitter sind anders als dem Personenschutz dienende Lichtschranken regelmäßig mit normalen, d.h. sich nicht selbsttestenden Fotozellen bestückt, welche aufgrund von Vorschriften der Berufsgenossenschaften für Lichtschranken zum Personenschutz nicht zugelassen sind. Zum Schutz gegen Verletzungen insbesondere der Hände von Bedienungspersonen ist der bekannte Lagerlift mit zwei auf Sicherheitsschalter einwirkenden Schaltleisten versehen, von denen eine oberhalb des Lichtgitters in der Beschickungs- und Entnahmeöffnung und eine an der Unterkante der Transporteinheit angeordnet ist. Voraussetzung für ein einwandfreies Arbeiten der Schaltleisten ist deren präzise und dauerhafte Lagerung sowie eine insbesondere bei breiten Lagerliften große Stabilität. Anstelle von Schaltleisten finden auch dem Personenschutz dienende Lichtschranken Anwendung, sie sind jedoch anders als die Lichtschranken zur Messung der Höhe des Lagerguts im vorderen Bereich der Beschickungs- und Entnahmeöffnung angeordnet und führen immer dann, wenn Bedienungspersonen vor dem völligen Stillstand der Transporteinheit in die Beschickungs- und Entnahmeöffnung greifen, zu sogenannten "Notstopps", deren Aufhebung naturgemäß mit Zeitverlusten verbunden ist.

### Darstellung der Erfindung

Der Erfindung liegt die Aufgabe zugrunde, einen Lagerlift der in Betracht gezogenen Gattung so auszugestalten, daß sein zur Ermittlung der Lagerguthöhe bestimmtes Lichtgitter zusätzlich zu Zwecken des Personenschutzes genutzt werden kann. Diese Aufgabe wird erfindungsgemäß dadurch gelöst, daß das Lichtgitter von einem während der Bewegungszyklen der Transporteinheit als Teil der Sicherheitseinrichtung nutzbaren, für Personenschutzzwecke zugelassenen Lichtgitter mit Eigentestung gebildet wird und daß zur Kompensation von Verzögerungen des durch das Lichtgitter ausgelösten Stoppvorgangs der Transporteinheit sowohl am oberen Rand des der Transporteinheit zugewandten Bereichs der Beschickungs- und Entnahmeöffnung als auch am der Beschickungs- und Entnahmeöffnung zugewandten unteren Rand der Transporteinheit Sicherungsschürzen angeordnet sind, die den Zugang zum Schacht der Transporteinheit partiell unterbindende Sperren bilden, welche Ausweichbewegungen um Beträge ausführen können, die ausreichen, um die Transporteinheit vor Erreichen der Schürzenendposition zum völligen Stillstand zu bringen.

Bei dem erfindungsgemäßen Lagerlift erfüllt das Lichtgitter eine Doppelfunktion. Bei sich während des Einlagerns in einer Ruheposition befindlichen Transporteinheit ermittelt es die Höhe des Lagerguts, sobald die Transporteinheit sich indes zu bewegen beginnt, wirkt es als Teil der Personenschutzeinrichtung. Risiken, die aus der Lage des Lichtgitters bei hohen Geschwindigkeiten der Transporteinheit resultieren könnten, werden durch die Sicherungsschürzen eliminiert, indem diese z.B. durch in die Gefahrzone gelangende Hände einer Bedienungsperson um Wegbeträge ausgelenkt bzw. verschoben werden, die größer als die Bremswege der Transporteinheit sind. Da der Aufwand für die Sicherungsschürzen und deren Lagerung deutlich geringer ist als der entsprechende Aufwand für den Einbau von Schaltleisten, erweist sich die erfindungsgemäße Lösung nicht nur als einfach und elegant, sondern auch als sehr wirtschaftlich. Die Mehrkosten für sich selbsttestende Fotozellen liegen deutlich unter den erzielbaren Einsparungen.

Weitere Einzelheiten und Merkmale der erfindungsgemäßen Konstruktion ergeben sich aus den Unteransprüchen und der nachstehenden Beschreibung mehrerer in der beigefügten Zeichnung dargestellter, vorteilhafter Ausführungsformen.

### Kurze Beschreibung der Zeichnungen

Es zeigen:

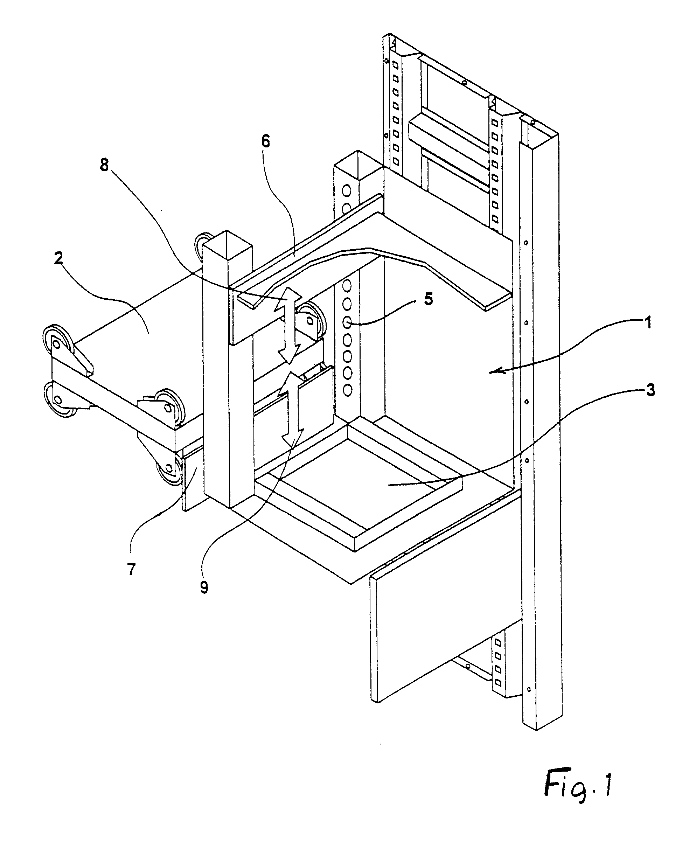

- Fig. 1: eine perspektivische Teilansicht der für das Verständnis der Erfindung wesentlichen Teile einer ersten Ausführungsform eines Lagerlifts,
- Fig. 2: stark schematisiert die beiden am häufigsten anzutreffenden Gefahrsituationen bei einem Lagerlift gem. Fig. 1,
- Fig. 3: eine der Fig. 1 entsprechende Teilansicht eines modifizierten Lagerlifts,
- Fig. 4: eine der Fig. 2 entsprechende Darstellung der Gefahrsituationen bei einem Lagerlift gem. Fig. 3,
- Fig. 5: eine der Fig. 3 entsprechende Teilansicht einer dritten Ausführungsform, und
- Fig. 6: die Gefahrsituationen bei einem Lagerlift gem. Fig. 5

### Wege zur Ausführung der Erfindung

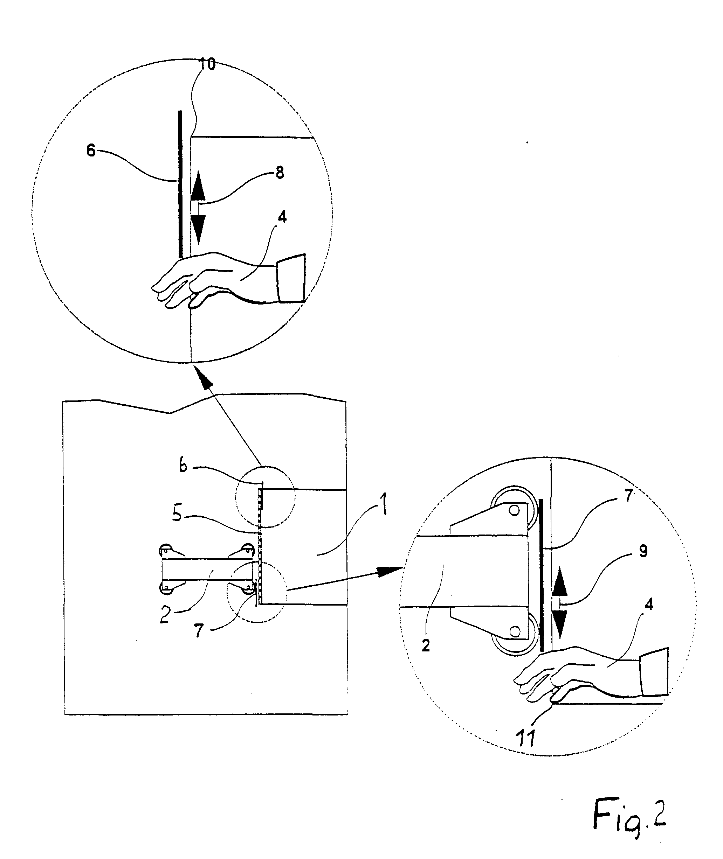

In den Figuren ist 1 die Beschickungs- und Entnahmeöffnung eines Lagerlifts mit zwei Lagersäulen, zwischen denen ein Förderschacht für eine auf- und abbewegbare Transporteinheit 2 angeordnet ist. Ein Lagerlift dieser Art ist aus der DE 296 06 381 U1 bekannt. Im Bereich der Öffnung 1 lassen sich als Tablare ausgebildete Lagergutträger 3 auf die auf- und abbewegbare Transporteinheit 2 überführen oder von der Transporteinheit 2 entfernen. Die Transporteinheit 2 ist zu diesem Zweck mit einer nicht dargestellten Horizontalfördereinrichtung versehen, die einen Eingriff des Benutzers des Lagerlifts in den zwischen den Lagersäulen angeordneten Schacht für die Transporteinheit 2 an sich entbehrlich macht. Es kommt aber immer wieder vor, daß unter Mißachtung der Sicherheitsvorschriften - wie in Fig. 2 angedeutet - eine Hand 4 in den Gefahrenbereich gelangt. Dabei passiert die Hand 4 ein am der Transporteinheit 2 zugewandten Ende der Beschickungs- und Entnahmeöffnung 1 angeordnetes Lichtgitter 5, das bei im Bereich der Beschickungs- und Entnahmeöffnung 1 stehender Transporteinheit 2 zur Messung der Höhe des in den Lagerlift einzubringenden Lagergutes dient. Um Verletzungen der Bedienungsperson auszuschließen, erfüllt das Lichtgitter, wie eingangs bereits ausgeführt, eine Doppelfunktion, indem es mit der Einleitung einer Bewegung in die Transporteinheit 2 nicht mehr zur Messung der Lagerguthöhe, sondern zur Unterbrechung der Vertikalbewegung der Transporteinheit 2, d.h. als Teil einer Sicherheitseinrichtung genutzt wird. Voraussetzung für eine derartige doppelte Nutzung ist die Verwendung eines Lichtgitters, das mit Fotozellen bestückt ist, die ihre Funktionsfähigkeit ständig selbst überprüfen. Derartige Lichtgitter für Personenschutzzwecke sind als solche bekannt. Die bekannten Lichtgitter von Sicherheitseinrichtungen werden jedoch nicht zur Messung der Höhe des Lagerguts genutzt und sind darüber hinaus zur Kompensation von Halteverzögerungen stets im Abstand vom der Transporteinheit 2 zugewandten Ende der Beschickungs- und Entnahmeöffnung 1 angeordnet, wobei - wie eingangs bereits erwähnt - mit zunehmender Nähe des Lichtgitters zum der Bedienungsperson zugewandten Ende der Beschickungs- und Entnahmeöffnung 1 die Zahl der Fehlstopps zunimmt.

Abweichend von den bekannten Sicherheitseinrichtungen wird beim in der Zeichnung dargestellten Lagerlift ein anderer Weg zur Kompensation der Schaltverzögerung des Lichtgitters 5 gewählt. Er besteht darin, daß sowohl am oberen Rand der Beschickungs- und Entnahmeöffnung 1 als auch an der Unterkante der Transporteinheit 2 jeweils eine Sicherungsschürze 6 bzw. 7 angeordnet ist. Beide Sicherungsschürzen 6 und 7 sind im dargestellten Fall im Sinne der Doppelpfeile 8 und 9 in vertikaler Richtung auf- und abbeweglich, ihr Hub ist dabei so groß gewählt, daß die Transporteinheit 2 mit Sicherheit zum Stehen kommt, bevor die Hand 4 in die Nähe der in Fig. 2 dargestellten kritischen Kanten 10 und 11 gelangt.

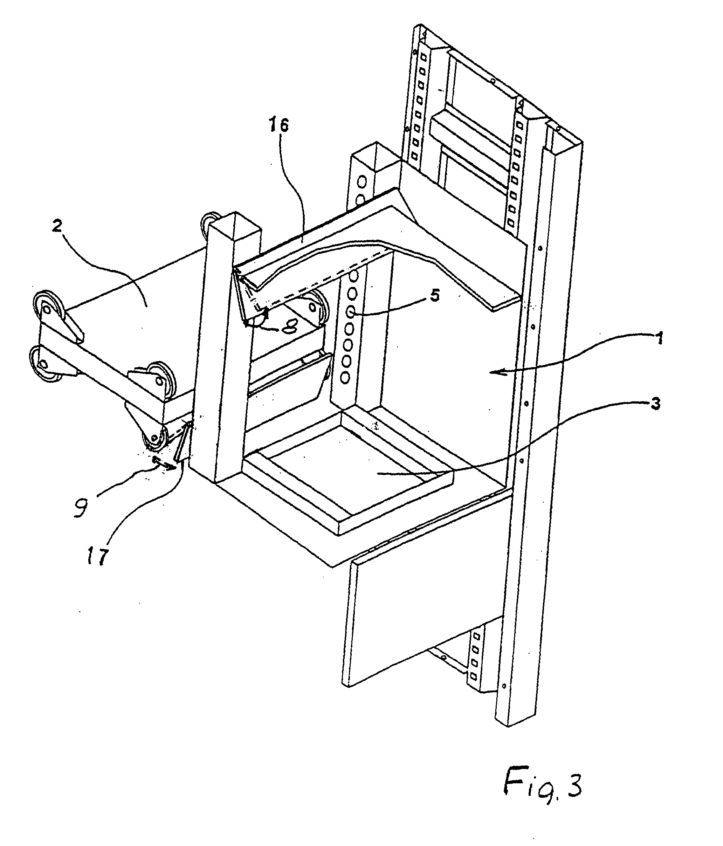

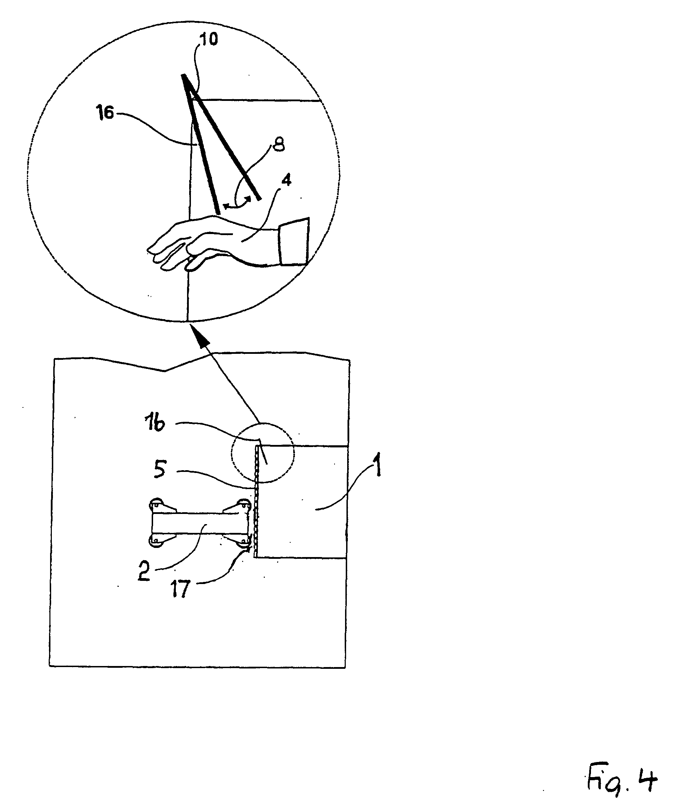

In den Figuren 3 und 4 sind die auf- und abbewegbaren Sicherheitsschürzen 6 und 7 durch in Richtung des Doppelpfeils 8 hin- und herschwenkbare klappenartige Sicherungsschürzen 16 und 17 ersetzt, deren Schwenkweg ausreicht, um beim Übergang aus der Ausgangslage in die Endlage die Transporteinheit 2 abzustoppen.

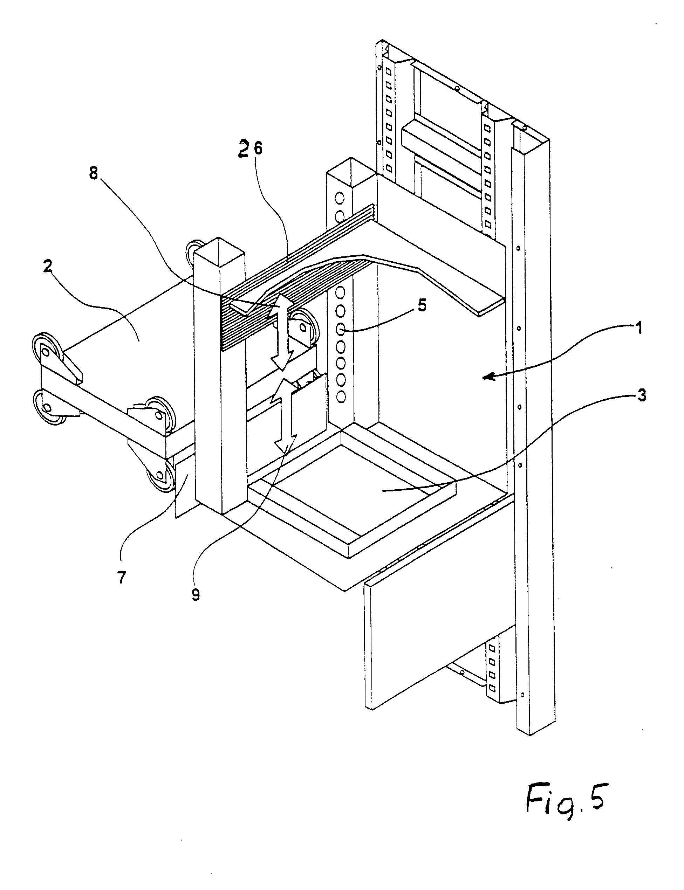

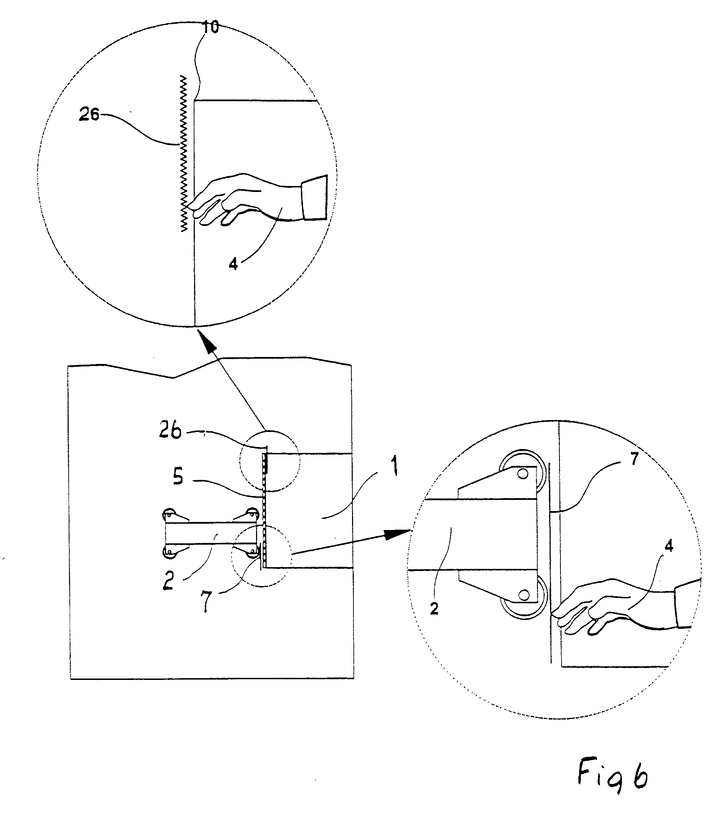

Die Figuren 5 und 6 zeigen schließlich eine Lösung mit einer unteren auf- und abbewegbaren Sicherungsschürze 7 und einer oberen Sicherungsschürze 26, die lamellen- bzw. balgartig ausgebildet ist. Möglich ist darüber hinaus die Verwendung von Sicherungsschürzen aus weichen Materialien wie Schaumstoff, Gummi oder dergleichen, die ein Untergreifen verhindern und eine Quetschung ausschließen.

## Patentansprüche

1. Lagerlift mit mindestens einer Beschickungs- und Entnahmeöffnung (1) und einer vertikal in einem Schacht zwischen sich gegenüberliegenden Lagersäulen verfahrbaren Transporteinheit (2) für einzulagernde Lagergutträger (3), bei dem am der Transporteinheit (2) zugewandten Ende der Beschickungs- und Entnahmeöffnung (1) ein Lichtgitter (5) zum Erfassen der Höhe des einzulagernden Gutes angeordnet ist und bei dem die Bewegung der Transporteinheit (2) während der Ein- bzw. Auslagervorgänge im Falle des Eindringens eines die Beschickungs- und Entnahmeöffnung (1) passierenden Fremdkörpers in die Bewegungsbahn der Transporteinheit (2) durch eine Sicherheitseinrichtung automatisch gestoppt wird, **dadurch gekennzeichnet, daß** das Lichtgitter (5) von einem während der Bewegungszyklen der Transporteinheit (2) als Teil der Sicherheitseinrichtung nutzbaren, für Personenschutzzwecke zugelassenen Lichtgitter (5) mit Eigentestung gebildet wird und daß zur Kompensation von Verzögerungen des durch das Lichtgitter (5) ausgelösten Stoppvorgangs der Transporteinheit (2) sowohl am oberen Rand des der Transporteinheit (2) zugewandten Bereichs der Beschickungs- und Entnahmeöffnung (1) als auch am der Beschickungs- und Entnahmeöffnung (1) zugewandten unteren Rand der Transporteinheit (2) Sicherungsschürzen (6,7) angeordnet sind, die den Zugang zum Schacht der Transporteinheit (2) partiell unterbindende Sperren bilden, welche Ausweichbewegungen um Beträge ausführen können, die ausreichen, um die Transporteinheit (2) vor Erreichen der Schürzenendposition zum völligen Stillstand zu bringen.

2. Lagerlift nach Anspruch 1, **dadurch gekennzeichnet, daß** die Sicherungsschürzen (6,7) um begrenzte Beträge auf- und abbewegbar geführt sind.

3. Lagerlift nach Anspruch 1, **dadurch gekennzeichnet, daß** die Sicherungsschürzen (16,17) um begrenzte Beträge hin- und herschwenkbar sind.

4. Lagerlift nach Anspruch 1, **dadurch gekennzeichnet, daß** die Sicherungsschürzen (26) um begrenzte Beträge zusammenschiebbar sind.

## Claims

1. A storage lift having at least one charging and removal opening (1) and a transporting unit (2) which can be displaced vertically in a shaft between mutually opposite storage columns and is intended for article carriers (3) which are to be stored, in which lift a light grille (5) for sensing the height of the article which is to be stored is arranged at that end of the charging and removal opening (1) which is directed toward the transporting unit (2), and in which lift the movement of the transporting unit (2) during the storage and retrieval operation is automatically stopped by a safety device in the case of a foreign body which passes through the charging and removal opening (1) penetrating into the movement path of the transporting unit (2), **characterized in that** the light grille (5) is formed by a light grille (5) with self-testing which can be utilized, during the movement cycles of the transporting unit (2), as part of the safety device and is authorized for personal-protection purposes, and **in that**, in order to compensate for delays brought about by the stopping operation of the transporting unit (2), said stopping operation being triggered by the light grille (5), safety aprons (6, 7) are arranged both on the top border of that region of the charging and removal opening (1) which is directed toward the transporting unit (2) and on the bottom border of the transporting unit (2), said bottom border being directed toward the charging and removal opening (1), and said safety aprons form barriers which partially bar access to the shaft of the transporting unit (2) and can execute yielding movements to extents which are sufficient in order for the transporting unit (2) to be brought to a full standstill before the apron end position is reached.

2. The storage lift as claimed in claim 1, **characterized in that** the safety aprons (6, 7) are guided such that they can be moved up and down to a limited extent.

3. The storage lift as claimed in claim 1, **characterized in that** the safety aprons (16, 17) can be pivoted back and forth to a limited extent.

4. The storage lift as claimed in claim 1, **characterized in that** the safety aprons (26) can be pushed together to a limited extent.

## Revendications

1. Monte- charge avec au moins une ouverture de chargement et d'enlèvement (1) et une unité de transport (2) pour des supports (3) de marchandises de stock à emmagasiner, pouvant monter et descendre verticalement dans un puits entre deux casiers de stockage situés en vis-à-vis, dans lequel une grille lumineuse (5) est disposée à l'extrémité de l'ouverture de chargement et d'enlèvement (1) tournée vers l'unité de transport (2) pour la saisie de la hauteur de la marchandise à emmagasiner, et dans lequel le déplacement de l'unité de transport (2) est automatiquement stoppé par un dispositif de sécurité pendant les processus de chargement et de déchargement en cas de pénétration d'un corps étranger passant l'ouverture de chargement et d'enlèvement (1) dans le trajet de déplacement de l'unité de transport (2), **caractérisé en ce que** la grille lumineuse (5) est constituée par une grille lumineuse (5) à auto- contrôle autorisée aux fins de la protection de personnes, utilisable comme partie du dispositif de sécurité pendant les cycles de déplacement de l'unité de transport (2), et **en ce que** des tabliers de sécurité (6,7) sont disposés pour la compensation de temporisations du processus d'arrêt de l'unité de transport (2) déclenché par la grille lumineuse (5) , aussi bien sur le bord supérieur de la zone de l'ouverture de chargement et de déchargement (1) tournée vers l'unité de transport (2) que sur le bord inférieur de l'unité de transport (2) tourné vers l'ouverture de chargement et d'enlèvement (1), et ces tabliers forment des dispositifs de blocage empêchant partiellement l'accès au puits de l'unité de transport (2), et ces dispositifs de blocage peuvent exécuter des déplacements d'évitements avec des amplitudes qui suffisent à amener l'unité de transport (2) à l'arrêt complet avant que soit atteinte la position finale des tabliers.

2. Monte- charge selon la revendication 1, **caractérisé en ce que** les tabliers de sécurité (6,7) sont guidés sur des amplitudes limitées pour des déplacements de monte et baisse.

3. Monte- charge selon la revendication 1, **caractérisé en ce que** les tabliers de sécurité (16, 17) peuvent osciller avec des amplitudes limitées.

4. Monte- charge selon la revendication 1, **caractérisé en ce que** les tabliers de sécurité (26) peuvent être comprimés sur des amplitudes limitées.
